# FASCICULE DE BREVET EUROPEEN

(11) **EP 2 917 605 B1**
(45) Date de publication et mention de la délivrance du brevet: **27.03.2019**
(21) Numéro de dépôt: 13808072.6
(22) Date de dépôt: 08.11.2013
(51) Int. Cl.: F16F 9/34, F16F 9/512

(54) **PISTON D'AMORTISSEUR ET AMORTISSEUR LE COMPORTANT**
STOSSDÄMPFERKOLBEN UND STOSSDÄMPFER DAMIT
SHOCK ABSORBER PISTON AND SHOCK ABSORBER COMPRISING SAME

(30) Priorité: 08.11.2012 FR 1260573
(43) Date de publication de la demande: 16.09.2015
(73) Titulaire: Bossard, Olivier, 31240 Saint Jean (FR)
(72) Inventeur: Bossard, Olivier, 31240 Saint Jean (FR)
(74) Mandataire: Ipside
(86) Numéro de dépôt international: PCT/FR2013/052694
(87) Numéro de publication internationale: WO 2014/072660

(56) Documents cités:
- EP-A1- 0 409 094
- EP-A1- 2 113 679
- WO-A1-99/31404

## Description

### Domaine technique.

La présente invention est du domaine des matériels utilisés pour assurer la suspension des roues des véhicules et concerne plus particulièrement un piston d'amortisseur hydraulique.

### État de la technique antérieure.

Typiquement, un amortisseur comprend un corps d'amortisseur dans lequel est usiné un alésage cylindrique recevant en coulissement un piston avec tige d'amortisseur, divisant l'alésage cylindrique en deux chambres de travail recevant chacune un fluide hydraulique. Le piston est habituellement équipé d'une ou plusieurs perçages de laminage, courant d'une grande face à l'autre du piston, assurant le transfert de l'huile d'une chambre de travail à l'autre lors du mouvement du piston dans l'alésage du corps de piston. Ces deux chambres, selon que le mouvement du piston dans chacune d'elles est un mouvement d'enfoncement ou un mouvement d'éloignement, travaillent en compression ou en détente.

Par ailleurs, le document EP0409094 A1 décrit un piston d'amortisseur d'un véhicule comprenant un conduit traversant dans lequel sont montés deux soupapes annulaires.

### Résumé de l'invention.

### Exposé du problème.

La vitesse d'enfoncement du piston dans la chambre travaillant en compression dépend notamment de la charge appliquée à l'amortisseur et de la section de laminage. L'augmentation de la vitesse d'enfoncement du piston dans la chambre travaillant en compression, s'accompagne d'une élévation de la pression hydraulique dans cette chambre et par voie de conséquence, d'une augmentation de la force de freinage appliquée par le fluide de cette chambre sur le piston.

Ainsi avec de faibles charges sont obtenues avec les amortisseurs de l'art antérieur, de faibles vitesses d'enfoncement du piston dans la chambre travaillant en compression et ainsi de faibles vitesses de réaction de l'amortisseur.

### Exposé de la solution.

L'objet de la présente invention à pour objet de pallier les inconvénients précédemment énoncés en proposant un nouveau piston pour amortisseur autorisant des vitesses de déplacement élevées sous de faibles charges.

À cet effet, le piston d'amortisseur, prévu pour être fixé à une tige d'amortisseur et prévu pour être monté en coulissement dans l'alésage cylindrique d'un corps d'amortisseur pour diviser ledit alésage en une première chambre et en une seconde chambre travaillant alternativement en compression et en détente, lesdites chambres recevant un fluide de travail, et ledit piston comprenant une première grande face prévue pour être en regard de la première chambre et une seconde grande face opposée à la précédente, prévue pour être en regard de la seconde chambre, se caractérise essentiellement en ce qu'il comporte un conduit traversant s'étendant d'une grande face à l'autre, dans lequel est monté un dispositif de soupape comprenant une soupape montée en ajustement glissant dans le conduit traversant, entre une position d'ouverture et une position de fermeture, la position d'ouverture de la soupape permettant le transfert du fluide de travail au travers du conduit traversant depuis la première grande face vers la seconde grande face et la position de fermeture de la soupape interdisant le transfert du fluide de travail dans le conduit traversant depuis la première grande face vers la seconde grande face du piston, la position d'ouverture de la soupape , en considérant le sens d'écoulement du fluide de travail au travers du conduit traversant de la première grande face vers la seconde grande face, étant une position amont par rapport à la position de fermeture, ladite soupape étant sollicitée vers sa position d'ouverture par un organe élastique et ladite soupape étant sollicitée vers sa position de fermeture par l'effet de la pression que lui exerce le fluide de travail lorsque ce dernier s'écoule ou à tendance à s'écouler dans le conduit depuis la première grande face vers la seconde grande face.

Selon l'invention, la soupape, en considérant le sens d'écoulement du fluide de travail dans le conduit traversant depuis la première grande face vers la seconde grande face, est montée dans la zone amont de ce dernier, ladite zone amont débouchant dans la première grande face tandis que la zone aval débouchant dans la seconde grande face.

Également selon l'invention, la zone amont du conduit traversant est formée par un fût, monté en fixation dans un perçage du piston, ledit fût étant doté d'un alésage axial traversant, la soupape étant engagée en ajustement glissant dans l'alésage traversant dudit fût. De cette manière, lorsque le piston s'enfonce dans la première chambre, un transfert de fluide de travail s'établit entre ces deux chambres d'abord avec peu de pertes de charges tant que la vitesse d'enfoncement du piston demeure en deçà d'une valeur préétablie. Dans cette plage de fonctionnement, la perte de charge dépend peu de la vitesse du piston, une faible charge appliquée sur ce piston conduit ainsi à un déplacement relativement rapide de ce dernier. Au cours du mouvement d'enfoncement du piston dans ladite chambre, la soupape sous l'effet de la pression de l'huile, reçoit une poussée axiale la sollicitant vers sa position de fermeture. Lorsque cette poussée devient supérieure à l'action du ressort, la soupape est disposée en position de fermeture ce qui interrompt brusquement tout transfert d'huile entre les deux chambres au travers du conduit traversant depuis sa zone amont vers sa zone aval. Le transfert de l'huile entre les deux chambres est alors assuré par les moyens usuels de laminage équipant le piston tels que perçages de laminage à section calibrée, formés au travers du piston d'une grande face à l'autre et des clapets sous forme de rondelle(s) élastique(s) ou autres.

L'effort appliqué par l'organe élastique sur la soupape, ainsi que la raideur de cet organe élastique déterminent donc le seuil de déclenchement du fonctionnement des dispositifs usuels de laminage. Tant que la soupape est ouverte, ces moyens de laminage ne sont pas actifs. En revanche lorsque la soupape est fermée, le transfert du fluide de travail est opéré par l'intermédiaire de ces moyens de laminage. Ainsi le système de soupape induit un retard dans l'action du ou des moyen de laminage usuels équipant le piston, ce ou ces moyens ne devenant actif que lorsque la soupape est fermée. Comme on le comprend, cette soupape demeure ouverte tant que la différence de pression entre les deux chambres de travail de l'amortisseur est faible, et dans ces conditions la vitesse du piston peut être élevée. En revanche lorsque cette différence s'accroit et est telle que la soupape est sollicitée vers sa position de fermeture, l'huile, après fermeture de la soupape, pour passer d'une chambre de travail à l'autre ne peut plus circuler au travers du système de soupape et est forcer à emprunter le ou les moyens de laminage usuels. Ainsi le contrôle du débit d'huile s'effectue au travers de ces moyens de laminage.

Selon une autre caractéristique de l'invention, la zone aval du conduit traversant du piston est équipée d'un clapet anti-retour interdisant tout transfert d'huile de ladite zone aval vers la zone amont du conduit.

Selon une autre caractéristique de l'invention, la position de complète ouverture de la soupape est matérialisée par au moins une butée d'arrêt disposée dans la zone amont du conduit traversant du piston, la soupape, en position de pleine ouverture, venant en appui contre la ou chaque butée.

Selon une autre caractéristique de l'invention, le fût selon une fraction de sa longueur est en débordement par rapport à la première grande face du piston et comporte dans sa zone débordante, à écartement de la première grande face du piston, la ou chaque butée d'arrêt.

Selon une autre caractéristique de l'invention, la ou chaque butée d'arrêt est formée par un bec radial s'étendant vers l'axe central du fût.

Selon une autre caractéristique de l'invention, le fût comporte plusieurs butées radiales régulièrement espacées.

Selon une autre caractéristique de l'invention, le fût sur une fraction de sa longueur, depuis son extrémité amont, présente au moins une ouverture radiale traversante de passage du fluide de travail vers le conduit.

Selon une autre caractéristique de l'invention, le fût comporte plusieurs ouvertures radiales angulairement espacées de manière régulière.

Selon une autre caractéristique de l'invention, la soupape est dotée d'un canal interne borgne obturé en extrémité amont de la soupape et ouvert en extrémité aval de ladite soupape pour communiquer avec la partie aval du conduit, ladite soupape, immédiatement en aval de son extrémité amont, comprenant au moins un perçage radial traversant débouchant dans le canal interne, ledit perçage radial, en position d'ouverture de la soupape étant en relation de communication avec l'ouverture radiale traversante du fût.

Selon une autre caractéristique de l'invention, la soupape est dotée d'une gorge continue de distribution, externe, dans laquelle débouche le ou chaque perçage traversant radial.

Selon une autre caractéristique de l'invention, chaque grande face du piston comprend une surépaisseur centrale.

Selon une autre caractéristique de l'invention, le clapet anti-retour comprend un corps de clapet doté d'un alésage traversant constituant la partie aval du conduit, ledit alésage traversant étant équipé d'un siège de clapet contre lequel, en position d'obturation, prend appui une bille de clapet.

Selon une autre caractéristique de l'invention, le corps de clapet comprend un filetage externe et est engagé en vissage, par ce filetage dans un taraudage du piston et prend appui contre le fût, lequel par son extrémité amont prend appui contre un épaulement de la surépaisseur centrale.

Selon une autre caractéristique de l'invention, l'organe élastique sollicitant la soupape vers sa position d'ouverture est monté en compression entre ladite soupape et le corps de clapet.

### Bref exposé des figures et des dessins.

D'autres avantages, buts et caractéristiques de l'invention apparaîtront à la lecture de la description d'une forme préférée de réalisation, donnée à titre d'exemple non limitatif en se référant aux dessins annexés en lesquels :
- la figure 1 est une vue en perspective d'un piston selon l'invention,
- la figure 1a est une vue en perspective du corps du piston selon l'invention,

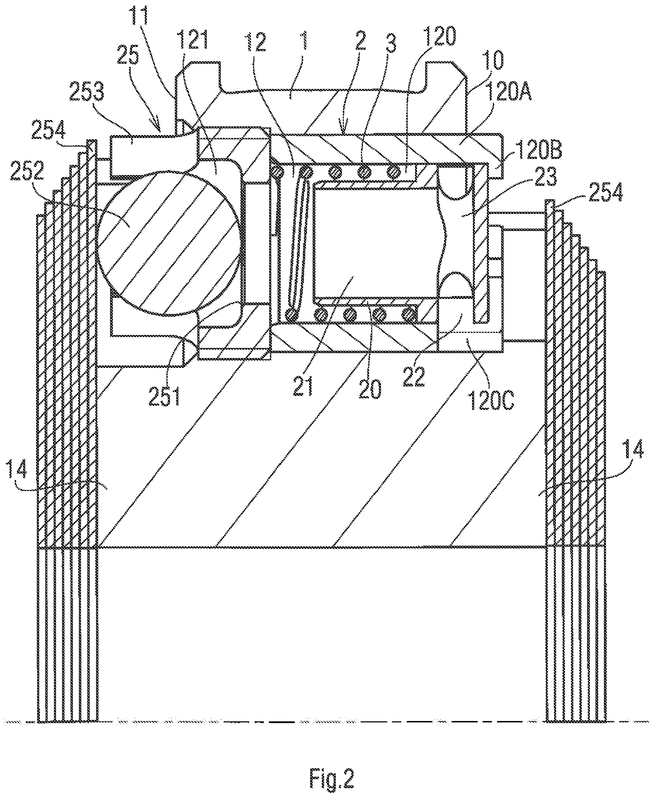

- la figure 2 est une demi vue en coupe d'un piston selon l'invention,

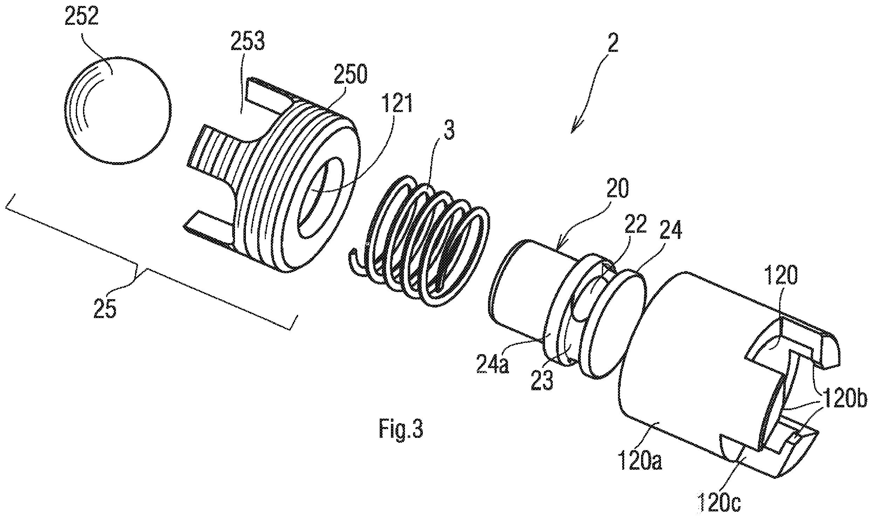

- les figures 3 et 4 sont des vues en perspective, en éclaté, d'un dispositif de soupape conforme à l'invention,
- la figure 5 est un diagramme illustrant le mode de fonctionnement d'un piston comportant un dispositif de soupape selon l'invention associé à un moyen usuel de laminage,
- la figure 6 est un diagramme illustrant le mode de fonctionnement propre au moyen de laminage,
- la figure 7 est un diagramme illustrant le mode de fonctionnement propre du dispositif de soupape,
- la figure 8 est une vue en coupe du piston au niveau d'un moyen de laminage. Meilleure manière de réaliser l'invention.

Aux figures jointes est représenté un piston 1 d'amortisseur selon l'invention.
Ce piston, substantiellement de forme cylindrique, est formé d'un corps de piston doté d'un perçage traversant central prévu pour recevoir en fixation l'une des deux extrémités d'une tige d'amortisseur.

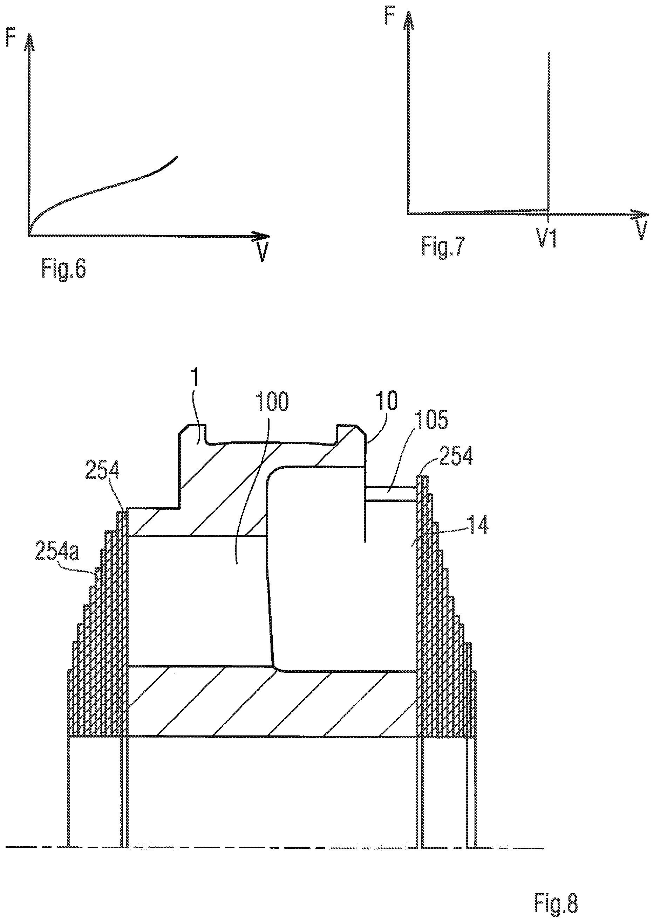

Ce piston 1 est destiné à être engagé en coulissement dans l'alésage cylindrique d'un corps d'amortisseur pour diviser ce dernier en deux chambres de travail, à savoir une première chambre et une seconde chambre, recevant toutes deux un fluide de travail tel que de l'huile, et travaillant alternativement en compression et en détente. Cet amortisseur prévu pour équiper un dispositif de suspension de la roue d'un véhicule, est interposé entre les parties suspendues et non suspendues de ce véhicule. Le piston 1, comme on peut le voir en figure 8, est par ailleurs doté d'au moins un moyen de laminage formé d'un perçage 100 traversant associé à au moins un dispositif de laminage, ce ou ces moyens de laminage assurant une communication à sens unique ou à double sens entre les deux chambres de travail. Ainsi, le fluide de travail, lors du mouvement du piston, sous certaines conditions, est amené à transiter d'une chambre à l'autre au travers du ou des moyens de laminage afin d'y dissiper l'énergie emmagasinée par le ressort associé à l'amortisseur.

Le piston 1, perpendiculairement à l'axe de révolution de son perçage traversant central, présente une première grande face 10, et une seconde grande face 11 parallèle et opposée à la précédente.

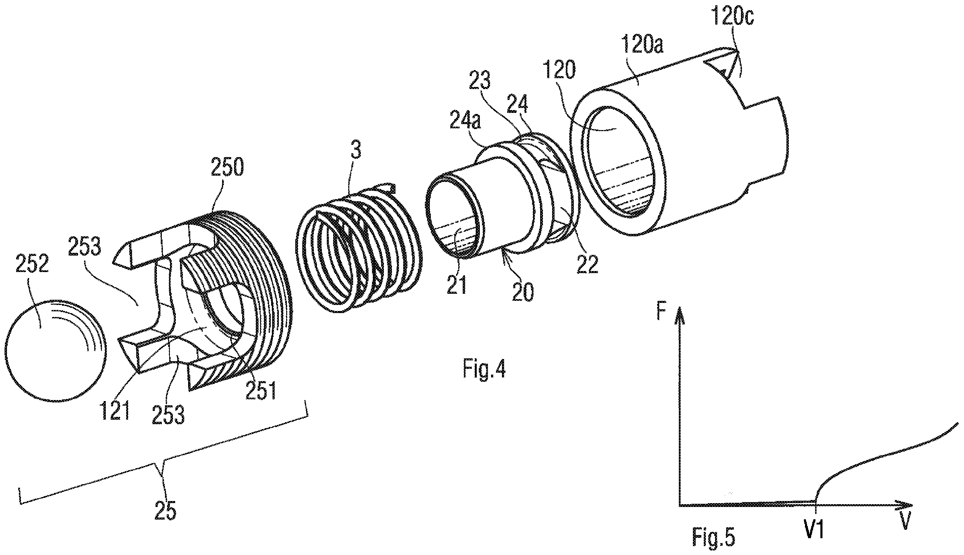

Conformément à l'invention, le piston 1 comprend un dispositif de soupape 2 permettant le transfert du fluide de travail de la première chambre vers la seconde chambre, avec des pertes de charge réduites tant que la vitesse d'enfoncement du piston 1 dans la première chambre demeure en deçà d'une valeur V1 prédéterminée. En revanche au dessus de cette vitesse, le transfert du fluide de travail au travers de ce dispositif à soupape est interrompu et le transfert de fluide de travail s'effectue au travers des moyens de laminage usuels équipant le piston. Un tel mode de fonctionnement est illustré par le diagramme de la figure 5 qui montre en abscisse, la vitesse V du piston dans le sens de la compression et en ordonnée, la charge mécanique F appliquée sur le piston. On peut voir sur ce diagramme que le dispositif de soupape retarde l'action du moyen de laminage. Après fermeture de la soupape le mode de fonctionnement adopté est celui du moyen de laminage. Le mode de fonctionnement propre au moyen de laminage est illustré en figure 6 tandis que le mode de fonctionnement propre au dispositif à soupape est illustré en figure 7.

Il y a lieu de noter que lors du mouvement inverse du piston, le transfert du fluide de travail au travers de ce même dispositif de soupape 2 ne se produit pas.

Ce dispositif de soupape 2 est monté dans un conduit traversant 12 formé dans le piston 1 et s'étendant d'une grande face à l'autre de ce dernier. Ce conduit traversant 12 comprend une zone amont 120 débouchant dans la première grande face du piston et une zone aval 121 débouchant dans la seconde grande face du piston. Le dispositif de soupape 2 comprend la zone amont 120 du conduit traversant et une soupape coulissante 20 montée mobile dans ladite zone amont, entre une position d'ouverture et une position de fermeture écartée de la précédente, ladite soupape étant sollicitée vers sa position d'ouverture par un organe élastique 3.

Le dispositif de soupape 2 comprend de plus, dans la zone aval 121 du conduit traversant 12, un clapet anti-retour 25 interdisant tout transfert d'huile de ladite zone aval vers la zone amont du conduit.

Selon une forme pratique de réalisation, la zone amont 120 du conduit traversant 12 est formée par l'alésage interne cylindrique traversant d'un fût cylindrique 120a, monté en fixation de manière étanche, dans un perçage du piston 1. L'alésage traversant 120 du fût cylindrique 120a reçoit en ajustement glissant la soupape 20.

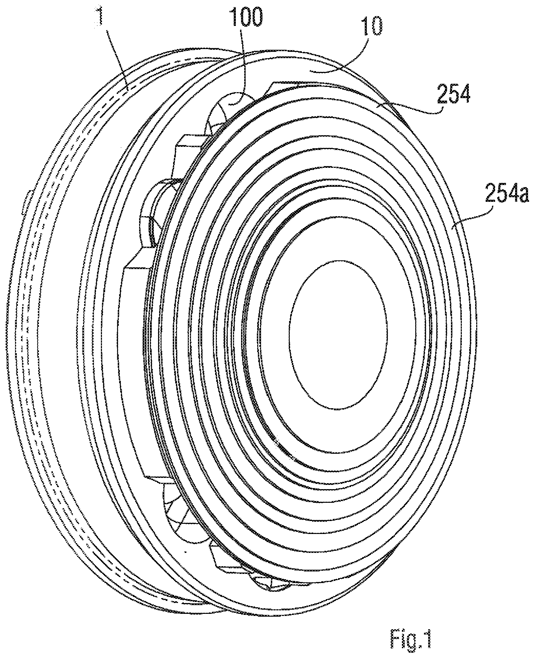

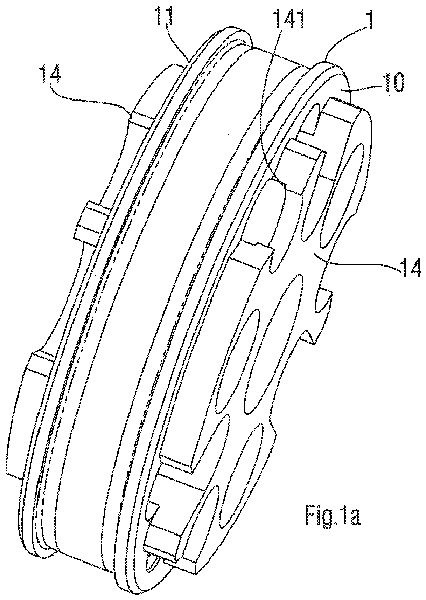

Dans une forme pratique de réalisation, la première grande face 10 du piston présente une surépaisseur centrale 14 et le fût 120a est appliqué contre un épaulement 141 de cette surépaisseur. Comme on peut le voir en figure 1a, cet épaulement est tourné vers le perçage du piston accueillant le fût 120a.

De préférence, la position de complète ouverture de la soupape 20 est matérialisée par au moins une butée d'arrêt 120b, disposée dans la zone amont du conduit traversant du piston, la soupape 20, en position de pleine ouverture venant en appui contre la butée. Dans la forme pratique de réalisation sont prévues trois butées d'arrêt 120b, angulairement espacées de manière régulière.

Selon la forme pratique de réalisation, le fût 120a, selon une fraction de sa longueur, est en débordement par rapport à la première grande face 10 du piston 1 et comporte dans sa zone débordante, à écartement de la première grande face du piston, la ou chaque butée d'arrêt 120b. Toujours selon la forme pratique de réalisation, chaque butée d'arrêt est formée par un bec radial s'étendant vers l'axe central du fût 120a.

Entre les butées 120b, le fût 120a, sur une fraction de sa longueur, depuis son extrémité débordante, à savoir l'extrémité amont, présente au moins une ouverture radiale traversante 120c de passage du fluide de travail vers le conduit 120. En combinaison avec cette caractéristique, la soupape 20, formée d'un corps cylindrique creux, est dotée d'un canal interne borgne 21 obturé en extrémité amont de la soupape, et ouvert en extrémité aval pour communiquer avec la partie aval 121 du conduit 12. Additionnellement, la soupape 20, immédiatement en aval de son extrémité amont, est dotée d'au moins un perçage radial traversant 22 débouchant dans le canal interne 21. Le perçage radial traversant 22 et le canal interne 21 sont destinés à être traversés par le fluide de travail lors du transfert de ce dernier de la première chambre vers la seconde chambre. En position d'ouverture de la soupape 20 et en positions intermédiaires de cette dernière, ce perçage radial 22 est en relation de communication avec la ou l'une au moins ouverture radiale traversante 120c du fût 120a. Pour faciliter cette communication, la soupape 20 est dotée d'une gorge continue de distribution 23, externe, dans laquelle débouche le ou chaque perçage traversant radial 22. On peut remarquer que la gorge de distribution 23 est écartée de quelques millimètres de l'extrémité amont de la soupape 20 afin que soit ménagée entre ladite gorge et ladite extrémité une portée cylindrique de guidage formant tampon d'obturation 24. Cette portée cylindrique de guidage 24, en combinaison avec une autre portée cylindrique de guidage 24a située en arrière de la gorge 23, assure le guidage de la soupape 20 dans l'alésage cylindrique 120 du fût 120a.

Lors du mouvement d'enfoncement du piston 1 dans la première chambre, la face terminale amont de la soupape 20 subit la pression du fluide hydraulique générée par ce mouvement et la soupape 20 se trouve sollicitée vers sa position d'obturation. Selon cette position d'obturation, la forme de tampon d'obturation 24 que présente la soupape se trouve disposée en partie ou en totalité en aval de la ou des ouvertures radiales 120c. Dans cette position de la soupape, le fluide de travail ne peut plus transiter par le dispositif de soupape 2 mais transite par les dispositifs de laminage usuels équipant le piston 1.

La soupape 20 en arrière de la gorge 23 présente une forme d'embout cylindrique sur lequel est enfilé l'organe élastique 3. Cet organe élastique 3 est constitué de préférence par un ressort de compression à spires dont les caractéristiques et le degré de compression déterminent le seuil d'obturation du dispositif de soupape 2. Cet organe élastique 3 est ainsi monté en compression entre un épaulement de la soupape et le clapet anti-retour 25.

Dans la forme préférée de réalisation, le clapet anti-retour 25 comprend un corps de clapet 250 doté d'un alésage traversant constituant la partie aval 121 du conduit 12. Cet alésage traversant est équipé d'un siège de clapet 251 contre lequel prend appui une bille de clapet 252 en position d'obturation. Dans la forme préférée de réalisation, le corps de clapet 250, par sa zone aval, est en débordement par rapport à la seconde grande face 11 du piston, et la dite zone aval est dotée de perçage radiaux traversant 253 pour faciliter le passage du fluide de travail. Par ailleurs, ladite face est équipée d'une surépaisseur centrale à laquelle est fixée par tout moyen connu, un diaphragme métallique élastiquement déformable 254 sous forme de disque, venant en regard de la partie aval 121 du conduit 12. Cette disposition à pour but d'assurer la rétention de la bille dans la zone aval du conduit.

Avantageusement, le corps de clapet comprend un filetage externe et est engagé en vissage, par ce filetage, dans un taraudage du piston et prend appui contre le fût. Ainsi le fût se trouve parfaitement immobilisé dans le piston. L'organe élastique 3 par son extrémité correspondante, prend également appui contre le corps de clapet.

Comme on peut le voir en figure 8, le ou chaque moyen de laminage est formé d'un perçage 100 traversant formé dans le piston 1 entre ces deux grandes faces 10 et 11 et par un clapet venant obturer l'une des extrémités de ce perçage. L'autre extrémité du perçage est ouverte et débouche préférentiellement au niveau dans une ouverture radiale 105 pratiquée dans la surépaisseur correspondante 14.
Le sens permis de passage d'huile au travers de ce moyen de laminage est identique au sens du passage d'huile au travers du système de soupape associé.

De manière originale, ce clapet est formé par le diaphragme 254, ce diaphragme 254 étant associé à un empilage de lamelles élastiques 254a déterminant en combinaison avec le clapet 254 les caractéristiques du moyen de laminage.

Le diaphragme 254 possède ainsi deux fonctions à savoir une fonction de laminage en raison de son appartenance au moyen de laminage et une fonction de butée ou de rétention de la bille 252.

Le piston selon l'invention pourra être doté d'au moins un premier dispositif de soupape conforme à l'invention, autorisant le passage du fluide depuis la première grande face 10 vers la seconde grande face 11 et d'au moins un second dispositif de soupape conforme à l'invention, autorisant le passage du fluide de travail depuis la seconde grande face 11 vers la première grande face 10.

Il va de soi que la présente invention peut recevoir tous aménagements et variantes du domaine des équivalents techniques sans pour autant sortir du cadre du présent brevet tel que défini par les revendications ci-après.

## Revendications

1. Piston (1) d'amortisseur équipant un dispositif de suspension d'un véhicule, ledit piston étant prévu pour être fixé à une tige d'amortisseur et être monté en coulissement dans l'alésage cylindrique d'un corps d'amortisseur pour diviser ledit alésage en une première chambre et en une seconde chambre travaillant alternativement en compression et en détente, lesdites chambres recevant un fluide de travail, et ledit piston (1) comprenant une première grande face (10) prévue pour être en regard de la première chambre et une seconde grande face (11) opposée à la précédente, prévue pour être en regard de la seconde chambre, ledit piston comportant un conduit traversant (12), s'étendant d'une grande face à l'autre, dans lequel est monté un dispositif de soupape (2) comprenant une soupape (20) montée en ajustement glissant dans le conduit traversant (12) entre une position d'ouverture et une position de fermeture, la position d'ouverture de la soupape (20) permettant le transfert du fluide de travail au travers du conduit (12) depuis la première face (10) vers la seconde face (11) et la position de fermeture de la soupape (20) interdisant le transfert du fluide de travail dans le conduit (12) depuis la première face (10) vers la seconde face (11), la position d'ouverture de la soupape (20), en considérant le sens d'écoulement du fluide de travail au travers du conduit (12) de la première grande face (10) vers la seconde grande face (11), étant une position amont par rapport à la position de fermeture, ladite soupape (20) étant sollicitée vers sa position d'ouverture par un organe élastique (3) et ladite soupape (20) étant sollicitée vers sa position de fermeture par l'effet de la pression que lui exerce le fluide de travail lorsque ce dernier s'écoule ou à tendance à s'écouler dans le conduit (12) depuis la première grande face (10) vers la seconde grande face (11), ladite soupape (20), en considérant le sens d'écoulement du fluide de travail dans le conduit (12) depuis la première grande face (10) vers la seconde grande face, (11) étant montée dans la zone amont (120) de ce dernier, ladite zone amont (120) débouchant dans la première grande face (10) tandis que la zone aval (121) débouchant dans la seconde grande face (11), **caractérisé en ce que** la zone amont (120) du conduit traversant (12) est formée par un fût (120a), monté en fixation dans un perçage du piston, ledit fût (120a) étant doté d'un alésage axial traversant formant en partie le conduit (12), la soupape (20) étant engagée en ajustement glissant dans l'alésage traversant dudit fût.

2. Piston selon la revendication 1, **caractérisé en ce que** la position de complète ouverture de la soupape ((20) est matérialisée par au moins une butée d'arrêt (120b) disposée dans la zone amont (120) du conduit traversant (12), la soupape (20), en position de pleine ouverture, venant en appui contre la ou chaque butée (120b).

3. Piston selon l'une quelconque des revendications précédentes, **caractérisé en ce que** le fût (120a), selon une fraction de sa longueur, est en débordement par rapport à la première grande face (10) et comporte dans sa zone débordante, à écartement de la première grande face (10), la ou chaque butée d'arrêt (120b).

4. Piston selon les revendications 2 et 3 prises ensemble, **caractérisé en ce que** la ou chaque butée d'arrêt (120b) est formée par un bec radial s'étendant vers l'axe central du fût (120a).

5. Piston selon l'une quelconque des revendications 3 et 4, **caractérisé en ce que** le fût (120a) sur une fraction de sa longueur, depuis son extrémité amont, présente au moins une ouverture radiale traversante (120c), de passage du fluide de travail vers le conduit (12).

6. Piston selon l'une quelconque des revendications 1 à 5, **caractérisé en ce que** la soupape (20) est formée d'un corps creux doté d'un canal interne borgne (21) obturé en extrémité amont de la soupape et ouvert en extrémité aval de ladite soupape pour communiquer avec la partie aval (121) du conduit (12), ladite soupape (20), immédiatement en aval de son extrémité amont, comprenant au moins un perçage radial traversant (22) débouchant dans le canal interne (21), ledit perçage radial, en position d'ouverture de la soupape (20), étant en relation de communication avec l'ouverture radiale traversante (120c) du fût (120).

7. Piston selon la revendication précédente, **caractérisé en ce que** la soupape (20) est dotée d'une gorge continue de distribution (23), externe, dans laquelle débouche le ou chaque perçage traversant radial (22).

8. Piston selon l'une quelconque des revendications 1 à 7, **caractérisé en ce que** la zone aval (121) du conduit traversant (12) est équipée d'un clapet anti-retour (25) interdisant tout transfert de fluide de travail de ladite zone aval vers la zone amont du conduit (12), c'est-à-dire depuis la seconde grande face (11) vers la première grande face (10).

9. Piston selon la revendication précédente, **caractérisé en ce que** le clapet anti-retour (25) comprend un corps de clapet (250) doté d'un alésage traversant constituant la partie aval (121) du conduit (12), ledit alésage traversant étant équipé d'un siège de clapet (251) contre lequel, prend appui une bille de clapet (252) en position d'obturation.

10. Piston selon la revendication précédente, **caractérisé en ce que** le corps de clapet (250) comprend un filetage externe et est engagé en vissage, par ce filetage dans un taraudage du piston et prend appui contre le fût (120a).

11. Piston selon l'une quelconque des revendications précédentes, **caractérisé en ce que** chaque grande face (10, 11) est dotée d'une surépaisseur centrale (14).

12. Piston selon les revendications 9 et 11 prises ensemble, **caractérisé en ce qu'**à la surépaisseur de la seconde grande face est fixé un diaphragme métallique élastiquement déformable (254), sous forme de disque, venant en regard de la partie aval (121) du conduit (12) pour y retenir la bille de clapet (252).

13. Piston selon l'une quelconque des revendications précédentes, **caractérisé en ce qu'**il comporte au moins un moyen de laminage d'huile constitué d'une part d'un perçage traversant (100) formé entre les deux grandes faces (10) et (11) et d'autre part par un clapet venant obturer l'une des extrémités de ce perçage, l'autre extrémité de ce perçage étant ouverte.

14. Piston selon les revendications 12 et 13 prises dans leur ensemble, **caractérisé en ce que** le clapet est formé par le diaphragme (254).

15. Amortisseur **caractérisé en ce qu'**il comporte un piston selon l'une quelconque des revendications précédentes.

## Patentansprüche

1. Kolben (1) eines Stoßdämpfers, der eine Aufhängungsvorrichtung eines Fahrzeugs ausrüstet, wobei der Kolben vorgesehen ist, an einer Stoßdämpferstange fixiert zu werden und gleitend in die Zylinderbohrung eines Stoßdämpferkörpers montiert zu werden, um die Bohrung in eine erste Kammer und in eine zweite Kammer zu unterteilen, die abwechselnd auf Druck und auf Zug arbeiten, wobei die Kammern eine Arbeitsflüssigkeit empfangen, und der Kolben (1) eine erste große Seite (10) umfasst, vorgesehen, um gegenüber der ersten Kammer zu sein, und eine zweite große Seite (11), entgegengesetzt zur vorstehenden, vorgesehen, um gegenüber der zweiten Kammer zu sein, wobei der Kolben einen Durchgangskanal (12) beinhaltet, der sich von einer großen Seite zu der anderen erstreckt, in dem eine Ventilvorrichtung (2) montiert ist, die ein Ventil (20) umfasst, das in dem Durchgangskanal (12) in gleitender Anpassung zwischen einer Öffnungsposition und einer Schließposition montiert ist, wobei die Öffnungsposition des Ventils (20) den Transfer der Arbeitsflüssigkeit durch den Kanal (12) hindurch von der ersten Seite (10) zu der zweiten Seite (11) ermöglicht, und die Schließposition des Ventils (20) den Transfer der Arbeitsflüssigkeit durch den Kanal (12) hindurch von der ersten Seite (10) zu der zweiten Seite (11) untersagt, wobei die Öffnungsposition des Ventils (20) unter Annahme der Strömungsrichtung der Arbeitsflüssigkeit durch den Kanal (12) hindurch von der ersten großen Seite (10) zu der zweiten großen Seite (11) eine stromaufwärtige Position im Verhältnis zu der Schließposition ist, wobei das Ventil (20) durch ein elastisches Organ (3) in seine Öffnungsposition gebracht wird, und das Ventil (20) durch die Wirkung des Drucks, den die Arbeitsflüssigkeit auf dieses ausübt, wenn letztere durch den Kanal (12) von der ersten großen Seite (10) zur zweiten großen Seite (11) strömt oder dazu tendiert, in seine Schließposition gebracht wird, wobei das Ventil (20) unter Annahme der Strömungsrichtung der Arbeitsflüssigkeit durch den Kanal (12) von der ersten großen Seite (10) zu der zweiten großen Seite (11) in der stromaufwärtigen Zone (120) von letzterem montiert ist, wobei die stromaufwärtige Zone (120) in die erste große Seite (10) mündet, während die stromabwärtige Zone (121) in die zweite große Seite (11) mündet, **dadurch gekennzeichnet, dass** die stromaufwärtige Zone (120) des Durchgangskanals (12) durch einen Schaft (120a) gebildet wird, der in einem Loch des Kolbens befestigt montiert ist, wobei der Schaft (120a) mit einer axialen Durchgangsbohrung versehen ist, die teilweise den Kanal (12) bildet, wobei das Ventil (20) in gleitender Anpassung in die Durchgangsbohrung des Schaftes eingreift.

2. Kolben nach Anspruch 1, **dadurch gekennzeichnet, dass** die vollständige Öffnungsposition des Ventils (20) durch mindestens einen Endanschlag (120b) verwirklicht ist, der in der stromaufwärtigen Zone (120) des Durchgangskanals (12) angeordnet ist, wobei sich das Ventil (20) in der Position der vollständigen Öffnung an den oder jeden Anschlag (120b) anlegt.

3. Kolben nach einem der vorstehenden Ansprüche, **dadurch gekennzeichnet, dass** der Schaft (120a), entsprechend einer Fraktion seiner Länge, im Verhältnis zur ersten großen Seite (10) überstehend ist und in seiner überstehenden Zone, im Abstand zur ersten großen Seite (10), den oder jeden Abschlag (120b) beinhaltet.

4. Kolben nach den Ansprüchen 2 und 3, zusammengenommen, **dadurch gekennzeichnet, dass** der oder jeder Endanschlag (120b) durch eine radiale Tülle gebildet wird, die sich zur zentralen Achse des Schaftes (120a) erstreckt.

5. Kolben nach einem der Ansprüche 3 und 4, **dadurch gekennzeichnet, dass** der Schaft (120a) auf einer Fraktion seiner Länge von seinem stromaufwärtigen Ende aus mindestens eine radiale Durchgangsöffnung (120c) für den Durchlass der Arbeitsflüssigkeit zu dem Kanal (12) aufweist.

6. Kolben nach einem der Ansprüche 1 bis 5, **dadurch gekennzeichnet, dass** das Ventil (20) aus einem Hohlkörper gebildet wird, der mit einem internen Blindkanal (21) versehen ist, der am stromaufwärtigen Ende des Ventils geschlossen, und am stromabwärtigen Ende des Ventils offen ist, um mit dem stromabwärtigen Teil (121) des Kanals (12) zu kommunizieren, wobei das Ventil (20) unmittelbar stromabwärts ihres stromaufwärtigen Endes mindestens eine radiale Durchgangsbohrung (22) umfasst, die in das interne Gerinne (21) mündet, wobei die radiale Bohrung, in der Öffnungsposition des Ventils (20) in Kommunikationsbeziehung mit der radialen Durchgangsöffnung (120c) des Schaftes (120) steht.

7. Kolben nach dem vorstehenden Anspruch, **dadurch gekennzeichnet, dass** das Ventil (20) mit einer durchgehenden externen Verteilungsnut (23) versehen ist, in die die oder jede radiale Durchgangsbohrung (22) mündet.

8. Kolben nach einem der Ansprüche 1 bis 7, **dadurch gekennzeichnet, dass** die stromabwärtige Zone (121) des Durchgangskanals (12) mit einer Rückschlagklappe (25) ausgerüstet ist, die jeden Transfer von Arbeitsflüssigkeit von der stromabwärtigen Zone zu der stromaufwärtigen Zone des Kanals (12), das heißt von der zweiten großen Seite (11) zur ersten großen Seite (10), untersagt.

9. Kolben nach dem vorstehenden Anspruch, **dadurch gekennzeichnet, dass** die Rückschlagklappe (25) einen Klappenkörper (250) umfasst, der mit einer Durchgangsbohrung versehen ist, die den stromabwärtigen Teil (121) des Kanals (12) bildet, wobei die Durchgangsbohrung mit einem Klappensitz (251) ausgerüstet ist, an den sich in der Schließposition eine Klappenkugel (252) anlegt.

10. Kolben nach dem vorstehenden Anspruch, **dadurch gekennzeichnet, dass** der Klappenkörper (250) ein externes Gewinde umfasst und durch dieses Gewinde verschraubt in ein Innengewinde des Kolbens eingreift, und sich an dem Schaft (120a) anlegt.

11. Kolben nach einem der vorstehenden Ansprüche, **dadurch gekennzeichnet, dass** jede große Seite (10, 11) mit einem zentralen Aufmaß (14) versehen ist.

12. Kolben nach den Ansprüchen 9 und 11, zusammengenommen, **dadurch gekennzeichnet, dass** bei dem Aufmaß der zweiten großen Seite eine verformbare metallische Membran (254) in Form einer Scheibe befestigt ist, die gegenüber den stromabwärtigen Teil (121) des Kanals (12) kommt, um dort die Klappenkugel (252) zurückzuhalten.

13. Kolben nach einem der vorstehenden Ansprüche, **dadurch gekennzeichnet, dass** er mindestens ein Öllaminierungsmittel beinhaltet, das einerseits aus einer Durchgangsbohrung (100) gebildet wird, die zwischen den großen Seiten (10) und (11) gebildet wird, und andererseits durch eine Klappe, die das eine der Enden dieser Bohrung verschließt, wobei das andere Ende dieser Bohrung offen ist.

14. Kolben nach den Ansprüchen 12 und 13, zusammengenommen, **dadurch gekennzeichnet, dass** die Klappe durch die Membran (254) gebildet wird.

15. Stoßdämpfer, **dadurch gekennzeichnet, dass** er einen Kolben nach einem der vorstehenden Ansprüche beinhaltet.

## Claims

1. Damper piston (1) equipping a vehicle suspension device, said piston being designed to be fixed to a damper rod and be mounted slidably in the cylindrical bore of a damper body in order to divide said bore into a first chamber and a second chamber working in alternation in compression and expansion, said chambers receiving a working fluid, and said piston (1) comprising a first large face (10) designed to be facing the first chamber and a second large face (11) opposite to the previous one, designed to be facing the second chamber, said piston comprising a through duct (12), extending from one face to the other, in which a valve device (2) is mounted, comprising a valve (20) mounted in a sliding fit in the through duct (12) between an open position and a closed position, the open position of the valve (20) allowing transfer of the working fluid through the duct (12) from the first face (10) to the second face (11) and the closed position of the valve (20) preventing transfer of the working fluid in the duct (12) from the first face (10) to the second face (11), the open position of the valve (20), considering the direction of flow of the working fluid through the duct (12) from the first large face (10) to the second large face (11), being an upstream position with respect to the closed position, said valve (20) being urged towards its open position by a resilient member (3) and said valve (20) being urged towards its closed position by the effect of the pressure that the working fluid exerts thereon when the latter flows or has a tendency to flow in the duct (12) from the first large face (10) to the second large face (11), said valve (20), considering the direction of flow of the working fluid in the duct (12) from the first large face (10) to the second large face (11), being mounted in the upstream zone (120) of said duct, said upstream zone (120) emerging in the first large face (10) while the downstream zone (121) emerging in the second large face (11), **characterised in that** the upstream zone (120) of the through duct (12) is formed by a barrel (120a), mounted fixed in a piercing in the piston, said barrel (120a) being provided with a through axial bore partly forming the duct (12), the valve (20) being engaged in a sliding fit in the through bore of said barrel.

2. Piston according to claim 1, **characterised in that** the position of complete opening of the valve (20) is represented by at least one stop (120b) disposed in the upstream zone (120) of the through duct (12), the valve (20), in the fully open position, coming into abutment against the or each stop (120b).

3. Piston according to any of the preceding claims, **characterised in that** the barrel (120a), along a portion of the length thereof, projects with respect to the first large face (10) and comprises, in its projecting zone, separated from the first large face (10), the or each stop (120b).

4. Piston according to claims 2 and 3 taken together, **characterised in that** the or each stop (120b) is formed by a radial nose extending towards the central axis of the barrel (120a).

5. Piston according to either claim 3 or claim 4, **characterised in that** the barrel (120a), over a portion of the length thereof, from the upstream end thereof, has at least one through radial opening (120c), for passage of the working fluid to the duct (12).

6. Piston according to any of claims 1 to 5, **characterised in that** the valve (20) is formed by a hollow body provided with a blind internal channel (21) closed off at the upstream end of the valve and open at the downstream end of said valve in order to communicate with the downstream part (121) of the duct (12), said valve (20), immediately downstream of the upstream end thereof, comprising at least one through radial piercing (22) emerging in the internal channel (21), said radial piercing, in the open position of the valve (20), being in a communication relationship with the through radial opening (120c) of the barrel (120).

7. Piston according to the preceding claim, **characterised in that** the valve (20) is provided with an external continuous distribution groove (23), wherein the or each radial through piercing (22) emerges.

8. Piston according to any of claims 1 to 7, **characterised in that** the downstream zone (121) of the through duct (12) is equipped with a non-return valve (25) preventing any transfer of working fluid from said downstream zone to the upstream zone of the duct (12), that is to say from the second large face (11) to the first large face (10).

9. Piston according to the preceding claim, **characterised in that** the non-return valve (25) comprises a valve body (250) provided with a through bore constituting the downstream part (121) of the duct (12), said through bore being equipped with a valve seat (251) against which a valve ball (252) bears in the closure position.

10. Piston according to the preceding claim, **characterised in that** the valve body (250) comprises an external thread and is engaged by screwing, by means of this thread, in an internal thread of the piston and bears against the barrel (120a).

11. Piston according to any of the preceding claims, **characterised in that** each large face (10, 11) is provided with a central protrusion (14).

12. Piston according to claims 9 and 11 taken together, **characterised in that** an elastically deformable metal diaphragm (254) in the form of a disc is fixed to the protrusion on the second large face, facing the downstream part (121) of the duct (12) in order to hold the valve wall (252) therein.

13. Piston according to any of the preceding claims, **characterised in that** it comprises at least one oil-throttling means consisting firstly of a through piercing (100) formed between the two large faces (10) and (11) and secondly by a valve closing off one of the ends of this piercing, the other end of this piercing being open.

14. Piston according to claims 12 and 13 taken together, **characterised in that** the valve is formed by the diaphragm (254).

15. Damper, **characterised in that** it comprises a piston according to any of the preceding claims.
